(19) **Europäisches Patentamt**
**European Patent Office**
**Office européen des brevets**

(11) **EP 4 400 536 A1**

(12) # EUROPEAN PATENT APPLICATION
published in accordance with Art. 153(4) EPC

(43) Date of publication:
**17.07.2024 Bulletin 2024/29**

(21) Application number: **22867333.1**

(22) Date of filing: **05.09.2022**

(51) International Patent Classification (IPC):
$C08J\ 5/24$ (2006.01)    $C08G\ 18/00$ (2006.01)
$C08G\ 18/08$ (2006.01)    $C08J\ 5/04$ (2006.01)
$C08J\ 9/04$ (2006.01)    $C08K\ 3/40$ (2006.01)
$C08K\ 5/521$ (2006.01)    $C08K\ 7/02$ (2006.01)
$C08L\ 75/04$ (2006.01)    $E01B\ 3/44$ (2006.01)

(52) Cooperative Patent Classification (CPC):
C08G 18/00; C08G 18/08; C08J 5/04; C08J 5/24;
C08J 9/04; C08K 3/40; C08K 5/521; C08K 7/02;
C08L 75/04; E01B 3/44

(86) International application number:
**PCT/JP2022/033296**

(87) International publication number:
**WO 2023/038011 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.09.2021 JP 2021147982
30.09.2021 JP 2021161765**

(71) Applicant: SEKISUI CHEMICAL CO., LTD.
**Osaka-shi
Osaka
530-8565 (JP)**

(72) Inventors:
• **ANAI, Yuuki**
**Ritto-shi, Shiga 520-3027 (JP)**
• **NISHIJIMA, Satoshi**
**Ritto-shi, Shiga 520-3027 (JP)**
• **YAMAMOTO, Takuma**
**Ritto-shi, Shiga 520-3027 (JP)**

(74) Representative: **Ter Meer Steinmeister & Partner
Patentanwälte mbB
Nymphenburger Straße 4
80335 München (DE)**

(54) **CURABLE RESIN MATERIAL, RESIN MOLDED BODY, AND METHOD FOR PRODUCING RESIN MOLDED BODY**

(57) Provided is a curable resin material capable of controlling variations in specific gravity in a resin molded body obtained therefrom. The curable resin material according to the present invention contains a polyol compound, an isocyanate compound, a powder of a urethane resin molded body containing a urethane resin and a glass fiber, and a long reinforcing fiber, wherein the curable resin material has an isocyanate index of 110 or more and 120 or less.

EP 4 400 536 A1

[FIG. 1]

**Description**

**TECHNICAL FIELD**

The present invention relates to a curable resin material comprising a polyol compound and an isocyanate compound. The present invention also relates to a method for producing a resin molded body using the curable resin material.

**BACKGROUND ART**

As a structural material such as a building material or the like, a resin molded body may be used in place of wood or the like. For example, as a railroad tie, a tie made of a resin molded body may be used in place of a wooden tie and a concrete tie.

As one example of the resin molded body, Patent Document 1 cited below discloses a foamed resin molded body containing a large number of long fibers aligned in one direction and a filler. In the foamed resin molded body, the content of the filler is 15% by weight or less, the expansion ratio of the foamed resin is 2.0 to 4.0 times, and the average particle diameter of the filler is not more than 20% the average cell diameter of the foamed resin.

Patent Document 2 cited below discloses a method for producing a resin molded body, including: a mixing step of mixing a polyol compound, an isocyanate compound, and a filler to obtain a first composition; an impregnation step of making the first composition to between long reinforcing fibers to obtain a curable resin composition; and a curing step of curing the curable resin composition in a mold. In the method for producing a resin molded body, the specific gravity of the filler is less than 4, and the average circularity of the filler is 0.65 or more.

**Related Art Documents**

**Patent Documents**

Patent Document 1: JP 2000-080191 A
Patent Document 2: WO 2020/054056 A1

**SUMMARY OF THE INVENTION**

**PROBLEMS TO BE SOLVED BY THE INVENTION**

A resin molded body may be produced by making a composition containing a filler penetrate a long reinforcing fiber bundle aligned in one direction. The use of the filler and the long reinforcing fiber bundle for a resin material can enhance the mechanical strength of a resulting resin molded body.

However, in conventional methods for producing a resin molded body, a composition containing a filler may have an excessively high viscosity. In addition, with the compounding composition of conventional compositions, a composition containing a filler may have an excessively high viscosity.

There is a problem that when the composition containing a filler has an excessively high viscosity, it is impossible to make the composition well penetrate the portions between long reinforcing fibers. When it is impossible to make the composition well penetrate to the portions between long reinforcing fibers, the specific gravity of a resulting resin molded body varies, so that the physical properties such as mechanical strength of the resulting resin molded body may deteriorate.

In addition, when the viscosity of the composition containing a filler is excessively high, the composition is hardly mixed by stirring, so that it is impossible to well react the polyol compound and the isocyanate compound, and an unreacted polyol compound may remain. In this case, there is a problem that the flame resistance of a resulting resin molded body is deteriorated.

An object of the present invention is to provide a curable resin material capable of controlling variation in specific gravity in a resin molded body obtained therefrom. Another object of the present invention is to provide a resin molded body capable of having controlled variation in specific gravity. Still another object of the present invention is to provide a method for producing a resin molded body capable of controlling variation in specific gravity in a resulting resin molded body.

**MEANS FOR SOLVING THE PROBLEMS**

The present specification discloses the following curable resin material, resin molded body, and method for producing a resin molded body.

According to a broad aspect of the present invention, there is provided a curable resin material comprising a polyol compound, an isocyanate compound, a powder of a urethane resin molded body comprising a urethane resin and a glass fiber, and a long reinforcing fiber, wherein the curable resin material has an isocyanate index of 110 or more and 120 or less.

In a specific aspect of the curable resin material according to the present invention, a content of the powder of a urethane resin molded body is 10 parts by weight or more and 30 parts by weight or less based on 100 parts by weight of the polyol compound.

In a specific aspect of the curable resin material according to the present invention, the glass fiber contained in the powder of a urethane resin molded body has a fiber length of 1000 um or less.

According to a broad aspect of the present invention, there is provided a resin molded body, which is a molded body of the curable resin material described above.

In a specific aspect of the resin molded body according to the present invention, the resin molded body is a foamed resin molded body.

According to a broad aspect of the present invention, there is provided a method for producing a resin molded body, the method comprising: a step of obtaining a first composition comprising a polyol compound, an isocyanate compound, and a powder of a urethane resin molded body; an impregnation step of making the first composition penetrate a long reinforcing fiber bundle in which long reinforcing fibers are aligned in one direction to obtain a second composition; and a curing step of curing the second composition in a mold, the second composition having an isocyanate index of 110 or more and 120 or less.

In a specific aspect of the method for producing a resin molded body according to the present invention, a content of the powder of a urethane resin molded body in the first composition is 10 parts by weight or more and 30 parts by weight or less based on 100 parts by weight of the polyol compound in the first composition.

In a specific aspect of the method for producing a resin molded body according to the present invention, the curing step is a foaming and curing step of foaming and curing the second composition in the mold.

In a specific aspect of the method for producing a resin molded body according to the present invention, the method for producing a resin molded body includes a spraying step of spraying, between the step of obtaining the first composition and the impregnation step, the first composition onto a long reinforcing fiber bundle in which long reinforcing fibers are aligned in one direction.

In a specific aspect of the method for producing a resin molded body according to the present invention, in the spraying step, the first composition is sprayed onto the long reinforcing fiber bundle while the long reinforcing fiber bundle is advanced in one direction.

In a specific aspect of the method for producing a resin molded body according to the present invention, the method for producing a resin molded body includes a step of obtaining the powder of a urethane resin molded body from a urethane resin molded body containing a urethane resin and a glass fiber.

In a specific aspect of the method for producing a resin molded body according to the present invention, the urethane resin molded body to be used for obtaining the powder of a urethane resin molded body is a recycled product.

**EFFECT OF THE INVENTION**

The curable resin material according to the present invention comprises a polyol compound, an isocyanate compound, a powder of a urethane resin molded body containing a urethane resin and a glass fiber, and a long reinforcing fiber. The curable material according to the present invention has an isocyanate index of 110 or more and 120 or less. Since the curable resin material according to the present invention has the above-described configuration, variation in specific gravity can be controlled in a resin molded body obtained therefrom.

A method for producing a resin molded body according to the present invention comprises: a step of obtaining a first composition comprising a polyol compound, an isocyanate compound, and a powder of a urethane resin molded body; an impregnation step of making the first composition penetrate a long reinforcing fiber bundle in which long reinforcing fibers are aligned in one direction to obtain a second composition; and a curing step of curing the second composition in a mold. In the method for producing a resin molded body according to the present invention, the second composition has an isocyanate index of 110 or more and 120 or less. Since the method for producing a resin molded body according to the present invention has the above-described configuration, variation in specific gravity can be controlled in the resulting resin molded body.

**BRIEF DESCRIPTION OF DRAWINGS**

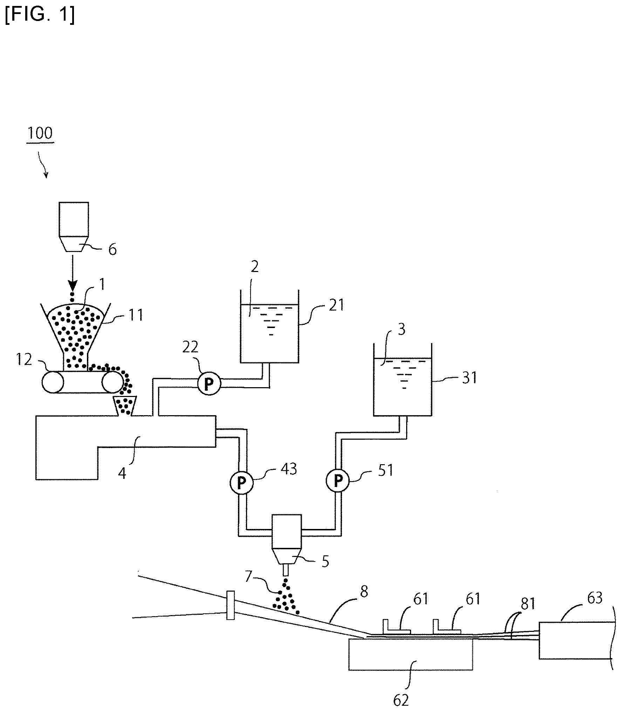

[Fig. 1] Fig. 1 is a diagram for explaining a method for producing a resin molded body according to one embodiment of the present invention.

**MODE FOR CARRYING OUT THE INVENTION**

Hereinafter, the present invention will be described in detail.

(Curable resin material)

The curable resin material (hereinafter, sometimes referred briefly to as "resin material") according to the present invention comprises a polyol compound (A), an isocyanate compound (B), a powder (C) of a urethane resin molded body containing a urethane resin and a glass fiber, and a long reinforcing fiber (D). The resin material according to the present invention has an isocyanate index of 110 or more and 120 or less.

Since the resin material according to the present invention has the above-described configuration, it is possible to easily adjust the viscosity of a composition comprising the polyol compound (A), the isocyanate compound (B), and the powder (C) of a urethane resin molded body containing a urethane resin and a glass fiber (a composition containing components other than the long reinforcing fiber (D)). As a result, it is possible to make the composition well penetrate portions between the long reinforcing fibers (D), so that variation in specific gravity of a resulting resin molded body can be controlled. In addition, since the resin material according to the present invention has the above-described configuration, the reaction efficiency between the polyol compound (A) and the isocyanate compound (B) can be enhanced, and the unreacted polyol compound (A) can be reduced. As a result, a resulting resin molded body can be improved in flame resistance.

In the resin material according to the present invention, since the isocyanate compound (B) is contained in an appropriately adjusted amount, the curing reaction can be well advanced, and the residual amount of the unreacted polyol compound (A) can be reduced. In addition, it becomes easy to adjust the viscosity of the composition containing the polyol compound (A), the isocyanate compound (B), and the powder (C) of a urethane resin molded body, so that it is possible to make the composition well penetrate portions between the long reinforcing fibers (D). As a result, the effect of the present invention is exhibited.

The isocyanate index is preferably 111 or more, more preferably 112 or more, and further preferably 113 or more, and preferably 119 or less, more preferably 118 or less, and further preferably 117 or less. When the isocyanate index is the above lower limit or more and the above upper limit or less, the flame retardancy of a resulting resin molded body can be further enhanced, and variation in the specific gravity of the resin molded body can be further controlled.

In the present specification, the isocyanate index means a value obtained by dividing the number of all isocyanate groups of the isocyanate compound (B) in the resin material by the total number of active hydrogen groups in the resin material and then multiplying the resulting quotient by 100. That is, the isocyanate index is a value calculated by the following formula (1). Examples of the active hydrogen group in the resin material include the hydroxy groups of the polyol compound (A) and water as a foaming agent.

$$\text{Isocyanate index} = (X/Y) \times 100 \quad \cdots \quad (1)$$

X: the number of all isocyanate groups of the isocyanate compound (B) in the resin material
Y: the total number of active hydrogen groups in the resin material

Hereinafter, details of the components contained in the resin material, and so on will be described.

<Polyol compound (A)>

The resin material contains a polyol compound (A). The polyol compound is a compound having two or more hydroxy groups (-OH groups).

The number of hydroxy groups in the polyol compound (A) may be 2, may be 2 or more, may be 3, may be 3 or more, may be 4, or may be 4 or more. The number of hydroxy groups in the polyol compound (A) may be 6 or less, may be 5 or less, or may be 4 or less.

Examples of the polyol compound (A) include a polylactone polyol, polycarbonate polyol, aromatic polyol, alicyclic polyol, aliphatic polyol, polyester polyol, and polyether polyol. The polyol compound may be a polymer polyol. The polyol compound (A) may be used singly or two or more types thereof may be used in combination.

Examples of the polylactone polyol include polypropiolactone glycol, polycaprolactone glycol, and polyvalerolactone glycol.

Examples of the polycarbonate polyol include a dealcoholization reaction product of a hydroxy group-containing compound and a carbonate compound. Examples of the hydroxy group-containing compound include ethylene glycol, propylene glycol, butanediol, pentanediol, hexanediol, octanediol, and nonanediol. Examples of the carbonate compound include diethylene carbonate, and dipropylene carbonate.

Examples of the aromatic polyol include bisphenol A, bisphenol F, phenol novolac, and cresol novolac.

Examples of the alicyclic polyol include cyclohexanediol, methylcyclohexanediol, isophoronediol, dicyclohexylmethanediol, and dimethyldicyclohexylmethanediol.

Examples of the aliphatic polyol include ethylene glycol, propylene glycol, butanediol, pentanediol, and hexanediol.

Examples of the polyester polyol include a dehydration condensation product of a polybasic acid and a polyhydric alcohol, a ring-opening polymer of lactone, a condensate of a hydroxycarboxylic acid and a polyhydric alcohol. Examples of the polybasic acid include adipic acid, azelaic acid, sebacic acid, terephthalic acid, isophthalic acid, and succinic acid. Examples of the polyhydric alcohol include bisphenol A, ethylene glycol, 1,2-propylene glycol, 1,4-butanediol, diethylene glycol, 1,6-hexane glycol, and neopentyl glycol. Examples of the lactone include $\varepsilon$-caprolactone, and $\alpha$-methyl-$\varepsilon$-caprolactone. Examples of the hydroxycarboxylic acid include castor oil, and a reaction product of castor oil and ethylene glycol.

Examples of the polyether polyol include a ring-opening polymer of an active hydrogen compound having two or more active hydrogen atoms and alkylene oxide. Examples of the alkylene oxide include ethylene oxide, propylene oxide, and tetrahydrofuran. The active hydrogen compound preferably has a small molecular weight. Examples of the active hydrogen compound include: diol compounds such as bisphenol A, ethylene glycol, propylene glycol, butylene glycol, and 1,6-hexanediol; triol compounds such as glycerin, and trimethylolpropane; and amine compounds such as ethylenediamine and butylenediamine.

Examples of the polymer polyol include a graft polymer obtained by graft-polymerizing an unsaturated organic compound with a polyol compound, polybutadiene polyol, a modified polyol of polyhydric alcohol, and hydrogenated products thereof.

Examples of the polyol compound in the graft polymer include aromatic polyol, alicyclic polyol, aliphatic polyol, polyester polyol, and polyether polyol. Examples of the unsaturated organic compound in the graft polymer include acrylonitrile, styrene, and methyl (meth)acrylate.

Examples of the modified polyol of polyhydric alcohol include a modified reaction product of polyhydric alcohol and alkylene oxide. Examples of the polyhydric alcohol include: trihydric alcohols such as glycerin and trimethylolpropane; alcohols with a valence of 4 or more and 8 or less such as pentaerythritol, sorbitol, mannitol, sorbitan, diglycerin, dipentaerythritol, sucrose, glucose, mannose, fructose, methylglucoside, and derivatives thereof; phenol compounds such as phenol, phloroglucin, cresol, pyrogallol, catechol, hydroquinone, bisphenol A, bisphenol F, bisphenol S, 1-hydroxynaphthalene, 1,3,6,8-tetrahydroxynaphthalene, anthrol, 1,4,5,8-tetrahydroxyanthracene, and 1-hydroxypyrene; polybutadiene polyols; castor oil polyols; (co)polymers of hydroxyalkyl (meth)acrylate; polyfunctional (e.g., 2 or more and 100 or less functional groups) polyols such as polyvinyl alcohol; and condensates (novolac) of phenol and formaldehyde. Examples of the alkylene oxide include alkylene oxides having 2 or more and 6 or less carbon atoms. Specific examples of the alkylene oxide include ethylene oxide, 1,2-propylene oxide, 1,3-propylene oxide, 1,2-butylene oxide, and 1,4-butylene oxide. From the viewpoint of improving properties and reactivity, the alkylene oxide is preferably 1,2-propylene oxide, ethylene oxide, or 1,2-butylene oxide, and more preferably 1,2-propylene oxide or ethylene oxide. The alkylene oxide may be used singly or two or more types thereof may be used in combination.

When two or more types of the alkylene oxides are used, the form of addition may be block addition, random addition, or both block addition and random addition.

The polyol compound (A) is preferably a polyol compound having a hydroxyl value of 490 mg KOH/g or more and 580 mg KOH/g or less, more preferably a polyol compound having a hydroxyl value of 490 mg KOH/g or more and 530 mg KOH/g or less, and is preferably a polyester polyol or a polyether polyol. In this case, the dispersibility of the powder (C) of a urethane resin molded body in the resin material can be further enhanced.

<Isocyanate compound (B)>

The resin material contains an isocyanate compound. The isocyanate compound is a compound having an isocyanate group (-NCO group).

The number of isocyanate groups in the isocyanate compound (B) may be 1, may be 2, may be 2 or more, may be 3, may be 3 or more, may be 4, or may be 4 or more. The number of isocyanate groups in the isocyanate compound (B) may be 6 or less, may be 5 or less, or may be 4 or less.

From the viewpoint of enhancing the curing reactivity, the number of isocyanate groups in the isocyanate compound (B) is preferably 2 or more. That is, the isocyanate compound (B) is preferably a polyisocyanate compound (isocyanate compound having two or more isocyanate groups).

Examples of the isocyanate compound (B) include aromatic polyisocyanates, alicyclic polyisocyanates, and aliphatic polyisocyanates. The isocyanate compound (B) may be used singly or two or more types thereof may be used in combination.

Examples of the aromatic polyisocyanate include phenylene diisocyanate, tolylene diisocyanate, xylylene diisocyanate, diphenylmethane diisocyanate, dimethyldiphenylmethane diisocyanate, triphenylmethane triisocyanate, naphthalene diisocyanate, and polymethylene polyphenyl polyisocyanate.

Examples of the alicyclic polyisocyanate include cyclohexylene diisocyanate, methylcyclohexylene diisocyanate, isophorone diisocyanate, dicyclohexylmethane diisocyanate, and dimethyldicyclohexylmethane diisocyanate.

Examples of the aliphatic polyisocyanate include methylene diisocyanate, ethylene diisocyanate, propylene diisocyanate, tetramethylene diisocyanate, and hexamethylene diisocyanate.

It is preferable that the isocyanate compound (B) is diphenylmethane diisocyanate or modified diphenylmethane diisocyanate, and more preferable that the isocyanate compound (B) is diphenylmethane diisocyanate because of their easy availability and superior convenience.

The polyol compound (A) and the isocyanate compound (B) can be used in appropriate compounding amounts such that a urethane linkage is efficiently formed. The content of the isocyanate compound (B) is preferably 100 parts by weight or more, more preferably 120 parts by weight or more, and still more preferably 130 parts by weight or more, and preferably 180 parts by weight or less, more preferably 160 parts by weight or less, and still more preferably 150 parts by weight or less based on 100 parts by weight of the polyol compound (A). When the content of the isocyanate compound (B) is the above lower limit or more and the above upper limit or less, the reaction efficiency between the polyol compound (A) and the isocyanate compound (B) can be enhanced and the unreacted polyol compound (A) or the unreacted isocyanate compound (B) can be further reduced. As a result, a resin molded body having a favorable flexural modulus can be formed.

<Powder (C) of urethane resin molded body containing urethane resin and glass fiber (filler)>

The resin material contains a powder (C) of a urethane resin molded body containing a urethane resin and a glass fiber. the powder (C) of a urethane resin molded body can be obtained from a urethane resin molded body containing the urethane resin and the glass fiber. The powder (C) of a urethane resin molded body serves as a filler. The powder (C) of a urethane resin molded body may be used singly or two or more types thereof may be used in combination.

As the powder (C) of a urethane resin molded body, for example, scraps (waste) generated when a urethane resin composition containing a urethane resin and a glass fiber or a urethane resin molded body is processed into a prescribed shape can be used. Scraps (conventionally, waste) generated when a urethane resin composition or a urethane resin molded body is processed into a prescribed shape are also referred to as a urethane resin molded body. The powder (C) of a urethane resin molded body may be a molded body molded into an unintended shape. In this case, the environmental load can be reduced and the cost can be reduced. The powder (C) of a urethane resin molded body may be a powder of a foamed resin molded body.

From the viewpoint of reducing the environmental load and the viewpoint of reducing the cost, the powder (C) of a urethane resin molded body is preferably chips of the urethane resin molded body. Examples of the chips include a powder (cutting waste) generated when the urethane resin molded body is cut, a powder (grinding waste) generated when the surface of the urethane resin molded body is sanded, and a powder (shaving waste) generated when a part of the urethane resin molded body is shaved off. The powder (C) of a urethane resin molded body is preferably cutting waste, grinding waste, or shaving waste of a urethane resin molded body.

From the viewpoint of reducing the environmental load and the viewpoint of reducing the cost, the powder (C) of a urethane resin molded body is preferably a recycled product of a urethane resin molded body. From the viewpoint of reducing the environmental load and the viewpoint of reducing the cost, the urethane resin molded body to be used for obtaining the powder (C) of a urethane resin molded body is preferably a recycled product. From the viewpoint of enhancing the recyclability of a resin molded body produced from the resin material of the present invention, the powder (C) of a urethane resin molded body is preferably a powder of a resin molded body produced in another lot (a powder of a resin molded body in another lot produced from the resin material of the present invention). The urethane resin molded body for obtaining the powder (C) of a urethane resin molded body is preferably a resin molded body produced in another lot (another lot product of a resin molded body produced from the resin material of the present invention). In this case, the environmental load can be further reduced, and the cost can be further reduced.

The shape of the powder (C) of a urethane resin molded body may or may not be spherical, and may be a polygonal shape, a plate shape, a scale shape, or the like.

The particle size $D_{90}$ of the powder (C) (filler) of a urethane resin molded body is preferably 50 um or more, more preferably 100 um or more, still more preferably 150 um or more, and particularly preferably 200 um or more, and preferably 1000 um or less, more preferably 900 um or less, still more preferably 700 um or less, further preferably 500 um or less, particularly preferably 450 um or less, and most preferably 430 um or less. When the particle size $D_{90}$ of the powder (C) of a urethane resin molded body is the above lower limit or more and the above upper limit or less, the effect of the present invention can be more effectively exhibited.

The particle size $D_{90}$ of the powder (C) of a urethane resin molded body can be adjusted by performing classification treatment or the like.

The particle size $D_{50}$ of the powder (C) of a urethane resin molded body is preferably 30 um or more, more preferably 50 um or more, and preferably 150 um or less, more preferably 130 um or less. When the particle size $D_{50}$ of the powder (C) of a urethane resin molded body is the above lower limit or more and the above upper limit or less, the effect of the present invention can be more effectively exhibited.

The particle size $D_{90}$ and the particle size $D_{50}$ of the powder (C) of a urethane resin molded body mean a value of the diameter corresponding to 90% integrated from the smaller particle diameter side and a value of the diameter corresponding to 50% integrated from the smaller particle diameter side, respectively, in a volume-based integrated fraction of particle diameter distribution measurement by a laser diffraction particle size distribution analyzer. The shape of the powder (C) of a urethane resin molded body having the particle size $D_{90}$ and the particle size $D_{50}$ may or may not be spherical, and may be a polygonal shape, a plate shape, a scale shape, or the like.

The fiber length of the glass fiber contained in the powder (C) of a urethane resin molded body is preferably 2000 um or less, more preferably 1000 um or less, and still more preferably 700 um or less. When the glass fiber length contained in the powder of a urethane resin molded body is the above upper limit or less, the effect of the present invention can be more effectively exhibited. The fiber length of the glass fiber contained in the powder (C) of a urethane resin molded body may be 10 um or more, and may be 100 um or more.

The fiber length of the glass fiber can be adjusted by performing classification treatment or the like.

The fiber length of the glass fiber can be measured by photographing the filler contained in the powder (C) of a urethane resin molded body with a microscope and measuring the microscope photograph using commercially available image analysis software. The fiber length of the glass fiber is an average value of the fiber lengths of arbitrarily selected 100 or more glass fibers. When 100 or more glass fibers are not present in the obtained microscope photograph, a new region is photographed with the microscope until the number of glass fibers becomes 100 or more.

The content of the powder (C) of a urethane resin molded body is preferably 5 parts by weight or more, more preferably 10 parts by weight or more, still more preferably 12 parts by weight or more, and particularly preferably 15 parts by weight or more based on 100 parts by weight of the polyol compound (A). The content of the powder (C) of a urethane resin molded body is preferably 50 parts by weight or less, more preferably 30 parts by weight or less, still more preferably 25 parts by weight or less, particularly preferably 23 parts by weight or less, and most preferably 20 parts by weight or less based on 100 parts by weight of the polyol compound (A). When the content of the powder (C) of a urethane resin molded body is the above lower limit or more, the mechanical strength of a resulting resin molded body can be further enhanced. When the content of the powder (C) of a urethane resin molded body is the above upper limit or less, it becomes easy to make a composition containing components other than the long reinforcing fibers penetrate the portions between the long reinforcing fibers (D), so that variation in specific gravity of a resulting resin molded body can be reduced and the flexural modulus can be enhanced.

The content of the powder (C) of a urethane resin molded body is preferably 2 parts by weight or more, more preferably 4 parts by weight or more, and preferably 20 parts by weight or less, more preferably 15 parts by weight or less based on 100 parts by weight in total of the polyol compound (A) and the isocyanate compound (B). When the content of the powder (C) of a urethane resin molded body is the above lower limit or more, the mechanical strength of a resulting resin molded body can be further enhanced. When the content of the powder (C) of a urethane resin molded body is the above upper limit or less, it becomes easy to make a composition containing components other than the long reinforcing fibers penetrate the portions between the long reinforcing fibers (D), so that variation in specific gravity of a resulting resin molded body can be reduced and the flexural modulus can be enhanced.

<Long reinforcing fiber (D)>

The resin material contains a long reinforcing fiber (D) . The long reinforcing fiber is a reinforcing fiber and is long fiber. The reinforcing fiber is a fibrous material having a certain strength. As the reinforcing fiber, for example, carbon fiber, glass fiber, aramid fiber, etc. are known. The fiber length of the long fiber is, for example, 50 mm or more in average fiber length. The long reinforcing fiber may be in the form of a long fiber reinforced sheet.

The long reinforcing fiber (D) may be either a monofilament or a fibrillated fiber (a substance in which a fiber protrudes in a beard shape).

Examples of the long reinforcing fiber (D) include a long carbon fiber, a long glass fiber, a long aramid fiber, a polyester fiber, a polyamide fiber, and an elongated reinforcing fiber. The long reinforcing fiber may be used singly or two or more types thereof may be used in combination.

From the viewpoint of further enhancing the mechanical strength of a resin molded body, the long reinforcing fiber (D) is preferably a long glass fiber. The long glass fiber is a fibrous material obtained by melting glass and pulling it into a fibrous shape.

From the viewpoint of further enhancing the mechanical strength of a resin molded body, the fiber length of the long reinforcing fiber (D) is preferably 50 mm or more, and more preferably 70 mm or more. The long reinforcing fiber can be cut into a desired size after pultrusion and the fiber length of the long reinforcing fiber can be appropriately varied depending on the cutting length. Therefore, the upper limit of the fiber length of the long reinforcing fiber (D) is not particularly limited. From the viewpoint of enhancing dimensional accuracy, the fiber length of the long reinforcing fiber (D) may be 10 m or less. Further, even if the fiber length of the long reinforcing fiber (D) is large, the long reinforcing fiber (D) can be prevented from easily being cut or tangled with each other by making a composition containing the components other than the long reinforcing fiber (D) penetrate the long reinforcing fiber (D). Furthermore, the resin molded body can be molded by pultrusion even if the compounding ratio of the long reinforcing fiber (D) is increased.

As the long reinforcing fiber (D), for example, a fiber prepared by lightly attaching a strand such as a roving and a yarn to a binder and shaping it into a string shape is suitably used.

The long reinforcing fiber (D) is preferably a fiber prepared by aligning monofilaments to form a roving. The fiber diameter of the monofilaments is preferably 1 um or more, more preferably 2 um or more, and still more preferably 10 um or more, and preferably 50 um or less, more preferably 40 um or less, and still more preferably 20 um or less.

The fiber diameter is preferably an average diameter. The average diameter is a number-average diameter, and is an arithmetic average value of the fiber diameters of randomly selected 100 fibers. The fiber diameter means a diameter of an equivalent circle diameter of a cross section taken along a direction orthogonal to the length direction of the fiber.

The content of the long reinforcing fiber (D) is preferably 200 parts by weight or more, and more preferably 250 parts by weight or more, and preferably 350 parts by weight or less, and more preferably 300 parts by weight or less based on 100 parts by weight of the polyol compound (A). When the content of the long reinforcing fiber (D) is the above lower limit or more, the flexural modulus of a resulting resin molded body can be further enhanced due to the content of the long reinforcing fiber (D). When the content of the long reinforcing fiber (D) is the above upper limit or less, it becomes easy to make a composition containing components other than the long reinforcing fibers penetrate the portions between the long reinforcing fibers (D), so that variation in specific gravity of a resulting resin molded body can be reduced and the flexural modulus can be enhanced.

The content of the long reinforcing fiber (D) is preferably 70 parts by weight or more, and more preferably 90 parts by weight or more, and preferably 150 parts by weight or less, and more preferably 120 parts by weight or less based on 100 parts by weight in total of the polyol compound (A) and the isocyanate compound (B). When the content of the long reinforcing fiber (D) is the above lower limit or more, the flexural modulus of a resulting resin molded body can be further enhanced due to the content of the long reinforcing fiber (D). When the content of the long reinforcing fiber (D) is the above upper limit or less, it becomes easy to make a composition containing components other than the long reinforcing fibers penetrate the portions between the long reinforcing fibers (D), so that variation in specific gravity of a resulting resin molded body can be reduced and the flexural modulus can be enhanced.

The content of the long reinforcing fiber (D) is preferably 80 parts by weight or more, and more preferably 90 parts by weight or more, and preferably 150 parts by weight or less, more preferably 120 parts by weight or less, and still more preferably 110 parts by weight or less based on 100 parts by weight of the components other than the long reinforcing fiber (D) in the resin material. When the content of the long reinforcing fiber (D) is the above lower limit or more and the above upper limit or less, the flexural modulus of a resulting resin molded body due to the content of the long reinforcing fiber (D) can be further enhanced. When the content of the long reinforcing fiber (D) is the above upper limit or less, it becomes easy to make a composition containing components other than the long reinforcing fibers penetrate the portions between the long reinforcing fibers (D), so that variation in specific gravity of a resulting resin molded body can be reduced and the flexural modulus can be enhanced.

<Foaming agent>

The resin material may or may not contain a foaming agent. When the resin material contains a foaming agent, a foamed resin molded body can be obtained. The foamed resin molded body has an advantage of being lightweight.

Examples of the foaming agent include water and organic halogen compounds. The foaming agent is preferably water because it is easily available and superior in convenience. Water reacts with the isocyanate compound (B) to generate $CO_2$, acting as a foaming agent. The foaming agent may be used singly or two or more types thereof may be used in combination.

Examples of the organic halogen compound include organochlorine compounds, organofluorine compounds, organobromine compounds, and organoiodine compounds. The organic halogen compound may be an organic halogen compound in which all hydrogen atoms are substituted with halogen atoms, or may be an organic halogen compound in which some hydrogen atoms are substituted with halogen atoms. From the viewpoints of improving the foamability during the formation of a resin molded body and keeping the thermal conductivity of the resin molded body low for a longer period of time, the organic halogen compound is preferably an organochlorine compound or an organofluorine compound.

Examples of the organochlorine compound include saturated organochlorine compounds and unsaturated organochlorine compounds. Examples of the saturated organochlorine compound include dichloroethane, propyl chloride, isopropyl chloride, butyl chloride, isobutyl chloride, pentyl chloride, and isopentyl chloride. From the viewpoints of improving the foamability during the formation of a resin molded body and keeping the thermal conductivity of the resin molded body low for a longer period of time, the organochlorine compound is preferably a saturated organochlorine compound, and more preferably a saturated organochlorine compound having 2 to 5 carbon atoms.

Examples of the organofluorine compound include saturated organofluorine compounds and unsaturated organofluorine compounds.

Examples of the saturated organofluorine compound include hydrofluorocarbons. Examples of the hydrofluorocarbon include difluoromethane (HFC32), 1,1,1,2,2-pentafluoroethane (HFC125), 1,1,1-trifluoroethane (HFC143a), 1,1,2,2-tetrafluoroethane (HFC134), 1,1,1,2-tetrafluoroethane (HFC134a), 1,1-difluoroethane (HFC152a), 1,1,1,2,3,3,3-heptafluoropropane (HFC227ea), 1,1,1,3,3-pentafluoropropane (HFC245fa), 1,1,1,3,3-pentafluorobutane (HFC365mfc), and 1,1,1,2,2,3,4,5,5,5-decafluoropentane (HFC4310mee).

Examples of the unsaturated organofluorine compound include hydrofluoroolefins. Examples of the hydrofluoroolefin include 2,3,3,3-tetrafluoropropene (HFO-1234yf), 1,3,3,3-tetrafluoropropene (HFO-1234ze) (E and Z isomers), and 1,1,1,4,4,4-hexafluoro-2-butene (HFO1336mzz) (E and Z isomers).

Examples of the organofluorine compound also include compounds having a chlorine atom, a fluorine atom, and a double bond. Examples of the compound having a chlorine atom, a fluorine atom, and a double bond include 1,2-dichloro-1,2-difluoroethene (E and Z isomers), and hydrochlorofluoroolefins. Examples of the hydrochlorofluoroolefin include 1-chloro-3,3,3-trifluoropropene (HCFO-1233zd) (E and Z isomers), 1-chloro-2,3,3-trifluoropropene (HCFO-1233yd) (E and Z isomers), 1-(4)chloro-1,3,3-trifluoropropene (HCFO-1233zb) (E and Z isomers), 2-chloro-1,3,3-trifluoropropene (HCFO-1233xe) (E and Z isomers), 2-chloro-2,2,3-trifluoropropene (HCFO-1233xc), 2-chloro-3,3,3-trifluoropropene (HCFO-1233xf), 3-chloro-1,2,3-trifluoropropene (HCFO-1233ye) (E and Z isomers), 3-chloro-1,1,2-trifluoropropene (HCFO-1233yc), 3,3-dichloro-3-fluoropropene, 1,2-dichloro-3,3,3-trifluoropropene (HCFO-1223xd) (E and Z isomers), 2-chloro-1,1,1,4,4,4-hexafluoro-2-butene (E and Z isomers), and 2-chloro-1,1,1,3,4,4,4-heptafluoro-2-butene (E and Z isomers).

From the viewpoints of improving the foamability during the formation of a resin molded body and keeping the thermal conductivity of the resin molded body low for a longer period of time, it is preferable that the organic halogen compound is a hydrochlorofluoroolefin, a hydrofluorocarbon, or a hydrofluoroolefin.

In consideration of foamability, the foaming agent can be used in an appropriate content.

<Other components>

The resin material may contain components other than the above-described components (namely, components different from the following five components: the polyol compound (A), the isocyanate compound (B), the powder (C) of a urethane resin molded body, the long reinforcing fiber (D), and the foaming agent).

Examples of the other components include a catalyst, a foam stabilizer, a flame retardant, and a powder other than the powder (C) of a urethane resin molded body (other filler). The other component may be used singly or two or more types thereof may be used in combination.

Catalyst:

The resin material preferably contains a catalyst. Examples of the catalyst include a urethanization catalyst and a trimerization catalyst. The catalyst may be used singly or two or more types thereof may be used in combination.

The resin material preferably contains a urethanization catalyst. The urethanization catalyst promotes the reaction between the hydroxy groups of the polyol compound and the isocyanate group of the isocyanate compound to promote the formation of a urethane linkage.

Examples of the urethanization catalyst include: organotin compounds such as dibutyltin dimaleate, dibutyltin dilaurate, and dibutylbis(oleoyloxy)stannane; tertiary amine compounds such as triethylamine, N-methylmorpholine bis(2-dimethylaminoethyl)ether, and N,N,N',N",N"-pentamethyldiethylenetriamine; N,N,N'-trimethylaminoethyl-ethanolamine; bis(2-dimethylaminoethyl)ether; N-methyl,N'-dimethylaminoethylpiperazine; and an imidazole compound in which the secondary amine functional group in the imidazole ring is substituted with a cyanoethyl group.

The urethanization catalyst may be used singly or two or more types thereof may be used in combination.

The urethanization catalyst can be used in an appropriate content such that the polyol compound and the isocyanate compound react well.

The trimerization catalyst promotes the trimerization reaction of the isocyanate group of the isocyanate compound to promote the formation of an isocyanurate ring. Furthermore, the trimerization catalyst inhibits expansion of a resin molded body during combustion.

Examples of the trimerization catalyst include aromatic compounds, alkali metal salts of carboxylic acids, quaternary ammonium salts of carboxylic acids, and quaternary ammonium salt/ethylene glycol mixtures. Examples of the aromatic compound include tris(dimethylaminomethyl)phenol, 2,4-bis(dimethylaminomethyl)phenol, and 2,4,6-tris(dialkylaminoalkyl)hexahydro-S-triazine. Examples of the alkali metal salt of a carboxylic acid include potassium acetate and potassium 2-ethylhexanoate. The trimerization catalyst may be used singly or two or more types thereof may be used in combination.

The trimerization catalyst can be used in an appropriate content such that the trimerization reaction is well promoted.

Foam stabilizer:

Examples of the foam stabilizer include polyoxyalkylene foam stabilizers such as polyoxyalkylene alkyl ether, and silicone foam stabilizers such as organopolysiloxane.

Other filler (hereinafter, filler):

Examples of the filler include a powdery filler. Owing to the use of the filler, the effect of reinforcing cell walls is effectively exhibited. In addition, owing to the use of the filler, the cost can be kept low. The filler may be an organic powder, an inorganic powder, or a mixed powder of an organic powder and an inorganic powder. The filler may be used singly or two or more types thereof may be used in combination.

Examples of the filler include: glass fiber waste; carbonate compounds such as calcium carbonate, magnesium carbonate, zinc carbonate, and barium carbonate; minerals such as dawsonite, hydrotalcite, mica, imogolite, sericite, and gypsum fiber; sulfate compounds such as calcium sulfate, barium sulfate, and magnesium sulfate; silicate compounds such as calcium silicate; clays such as talc, clay, montmorillonite, bentonite, activated clay, and sepiolite; nitrides such as aluminum nitride, boron nitride, and silicon nitride; carbon compounds such as carbon black, graphite, carbon balloon, and charcoal powder; titanium compounds such as potassium titanate and lead zirconate titanate; metal borate compounds such as aluminum borate; sulfides such as molybdenum sulfide; carbides such as silicon carbide; ashes such as fly ash, coal ash, and shirasu balloon; sands such as silica sand; volcanic debris such as pumice; wood chips; bamboo chips; starch; rice bran; and a powder of a resin molded body.

<Other details of curable resin material>

The resin material can be prepared by mixing the polyol compound (A), the isocyanate compound (B), the powder (C) of a urethane resin molded body, the long reinforcing fiber (D), and other components to be blended, as necessary. The method for mixing the respective components is not particularly limited. The resin material may be obtained by preparing a plurality of liquids containing one or more components and mixing the plurality of liquids. The mixing of the plurality of liquids may be performed when a resin molded body is formed. The isocyanate compound (B) and the powder (C) of a urethane resin molded body may be mixed with a liquid containing the polyol compound (A), followed by making the resulting liquid penetrate into the long reinforcing fiber (D). The powder (C) of a urethane resin molded body may be mixed with a liquid containing the polyol compound (A), and then the isocyanate compound (B) may be mixed, followed by making the resulting liquid penetrate into the long reinforcing fiber (D).

(Resin molded body)

The resin molded body according to the present invention is a molded body of the curable resin material described above. A resin molded body can be obtained by molding the resin material. For example, a resin molded body can be obtained by heating the resin material at 40°C to 80°C, and molding and curing it. The resin molded body may be a foamed resin molded body. When the resin molded body is a foamed resin molded body, the weight of the resin molded body can be reduced.

The resin molded body can be used for such applications as buildings, vehicles and ships, railway facilities, water treatment facilities, factory facilities, aquaculture facilities, electric facilities, sports and park facilities, and civil engineering sites.

The resin molded body is suitably used in buildings for a balcony, a floor material, a base, a beam, a joist, a bundle, a roof, a crosspiece, etc.

The resin molded body is suitably used in vehicles or ships for a joist, an FFU ship, a deck, a bulkhead, a truck deck material, a bridge, etc.

The resin molded body is suitably used in railway facilities for a sidewalk plate, a large three-sail protective plate, a platform, a tie (bridge tie, switch tie, regular tie, short tie), etc.

The resin molded body is suitably used in water treatment facilities for a cover lid, a flash board, a shuttering board, a flocculator blade, a door, a louver, a straightening plate, a baffle plate, a partition plate, an inclined plate, etc.

The resin molded body is suitably used in factory facilities for a floor plate, a corridor, a pit lid, a chemical bath, a water tub, a workbench, a rack, a joist, a pallet, a freezer, etc.

The resin molded body is suitably used in aquaculture facilities for a hatching tank, a cultivation tank, a live fish tank, a corridor, etc.

The resin molded body is suitably used in electric facilities for a cleat, a pipe cleat, etc.

The resin molded body is suitably used in sports and park facilities for a pergola, a bridge, a guide plate, an azumaya, a centerfield screen, a tennis practice board, a scoreboard, a floating platform, a suspension bridge, a walkway, a ski board core material, a waterwheel, a pool member, etc.

The resin molded body is suitably used for a pressure receiving plate, an SEW earth retaining wall, and so on at a construction site.

The resin molded body is particularly suitably used as a tie. The tie may be, for example, a tie having a rectangular parallelepiped shape, or may be a tie including a rectangular parallelepiped main body and a protrusion protruding outward from the main body.

The tie (resin molded body) may have a length direction and a width direction. From the viewpoint of further improving the flexural modulus of the tie, it is preferable that the long reinforcing fibers are arranged along the length direction of the tie (resin molded body).


(Method for producing resin molded body)

Details of the respective materials ((1) the polyol compound, (A), the isocyanate compound (B), the powder (C) of a urethane resin molded body, the foaming agent, and so on) of the resin molded body to be described in the following section of the method for producing a resin molded body are the same as those of the respective materials described in the section of the curable resin material.

The method for producing a resin molded body according to the present invention includes the following steps. (1) A step of obtaining a first composition comprising a polyol compound (A), an isocyanate compound (B), and a powder (C) of a urethane resin molded body. (2) An impregnation step of making the first composition penetrate a long reinforcing fiber bundle in which long reinforcing fibers are aligned in one direction to obtain a second composition. (3) A curing step of curing the second composition in a mold. The second composition has an isocyanate index of 110 or more and 120 or less. Since the method for producing a resin molded body according to the present invention has the above-described configuration, variation in specific gravity can be controlled in the resulting resin molded body. In addition, it is possible to make the composition containing the powder of a urethane resin molded body well penetrate portions between the long reinforcing fibers.

The first composition may or may not contain a foaming agent. The second composition may or may not contain a foaming agent. In the curing step, a foaming agent may or may not be used. The curing step is preferably a foaming and curing step of foaming and curing the second composition in the mold. In this case, the resulting resin molded body can be reduced in weight.

The method for producing a resin molded body preferably includes a step of obtaining the powder (C) of a urethane resin molded body from a urethane resin molded body containing a urethane resin and a glass fiber. In this case, in the method for producing a resin molded body, even when a large amount of chips of the urethane resin molded body are generated during processing of the urethane resin molded body, the chips can be recycled and utilized as a filler, so that the environmental load can be reduced and the cost can be reduced. In addition, from the viewpoint of reducing the environmental load and the viewpoint of reducing the cost, the urethane resin molded body to be used for obtaining the powder (C) of a urethane resin molded body is preferably a recycled product.

The method for producing a resin molded body preferably includes (1A) a spraying step of spraying, between (1) the step of obtaining the first composition and (2) the impregnation step, the first composition onto a long reinforcing fiber bundle in which long reinforcing fibers are aligned in one direction. In the spraying step, it is preferable to spray the first composition onto the long reinforcing fiber bundle using a sprayer. In the spraying step, it is preferable to spray the first composition onto the long reinforcing fiber bundle while the long reinforcing fiber bundle is advanced in one direction.

Fig. 1 is a diagram for explaining a method for producing a resin molded body according to one embodiment of the present invention.

The production apparatus 100 includes a hopper 11, a belt feeder 12, an extruder 4 with a built-in screw, a pump 43, a first raw material tank 21, a pump 22, a second raw material tank 31, a pump 51, a mixing sprayer 5, a kneading plate 61, an impregnation plate 62, and a mold 63 having a heating unit. The production apparatus 100 further includes a conveying means capable of advancing the long reinforcing fiber bundle 8 in one direction (in the diagram, the direction from left to right).

<Step of obtaining powder (C) of urethane resin molded body (also referred to as classification step)>

A powder (C) of a urethane resin molded body (filler 1) is obtained from a urethane resin molded body containing a urethane resin and a glass fiber. For example, chips of the urethane resin molded body are put into a classifier 6 and subjected to classification treatment, affording the filler 1. In this step, the urethane resin molded body may be, for example, scraps (conventionally, waste) generated when a urethane resin composition or a urethane resin molded body is processed into a prescribed shape.

<Step of obtaining first composition>

The filler 1 is put into the hopper 11, and then the filler 1 is conveyed by the belt feeder 12 and fed to the extruder 4. The extruder 4 includes two screws in a cylinder. In addition, the first raw material 2 is put into the first raw material tank 21 and mixed. The first raw material 2 is a liquid containing a polyol compound. The first raw material 2 preferably contains a foaming agent. The first raw material 2 is fed to the extruder 4 by the pump 22. In the extruder 4, the filler 1 and the first raw material 2 are mixed by the rotation of the screws of the extruder 4, so that a mixed liquid of the filler 1 and the first raw material 2 (hereinafter, it may be described as "mixed liquid A") is obtained.

The second raw material 3 is charged into the second raw material tank 31. The second raw material 3 is an isocyanate compound. The second raw material 2 may contain a foaming agent.

The mixed liquid A is fed to the mixing sprayer 5 by the pump 43. The second raw material 3 is fed to the mixing sprayer 5 by the pump 51. In the mixing sprayer 5, the mixed liquid A and the second raw material 3 are uniformly mixed, and a first composition 7 (a mixed liquid of the polyol compound, the isocyanate compound, the filler 1 (the powder of a urethane resin molded body), and the foaming agent) is obtained. The mixed liquid A may contain a foaming agent, the second raw material 3 may contain a foaming agent, and a foaming agent may be incorporated at the time of mixing the mixed liquid A and the second raw material 3.

<Spraying step>

The first composition 7 is sprayed from a discharge port of the mixing sprayer 5 onto a long reinforcing fiber bundle 8 (a fiber bundle of long reinforcing fibers) in which long reinforcing fibers are aligned in one direction. The first composition 7 is sprayed onto the long reinforcing fiber bundle 8 while the long reinforcing fiber bundle 8 is advanced in one direction. In the present embodiment, the long reinforcing fibers are long glass fibers, and the long reinforcing fiber bundle 8 is a long glass fiber bundle.

<Impregnation step>

The first composition 7 and the long reinforcing fiber bundle 8 are kneaded between the kneading plate 61 and the impregnation plate 62, and the portions between the long reinforcing fibers constituting the long reinforcing fiber bundle 8 are impregnated with the first composition 7. The impregnation plate 62 is a plate to be used for impregnation and is a plate for impregnation. In this way, a second composition 81 (curable resin material, composite) in which the long reinforcing fiber bundle 8 is impregnated with the first composition 7 is obtained. In the present invention, since the resin material is designed to have the first constitution, the first composition 7 is well penetrated into the portions between long reinforcing fibers, and the first composition 7 is well retained in the portions between long reinforcing fibers.

In the impregnation step, the first composition is made to penetrate the long reinforcing fiber bundle to afford the second composition (curable resin material, composite). From the viewpoint of making the first composition well penetrate the portions between long reinforcing fibers, the first composition and the long reinforcing fiber bundle are preferably kneaded between the kneading plate and the impregnation plate in the impregnation step. However, in the impregnation step, the first composition may be made to penetrate the long reinforcing fiber bundle by using, for example, an endless belt instead of the impregnation plate.

In the impregnation step, it is preferable to make the first composition penetrate the long reinforcing fiber bundle while controlling the temperature of the first composition using a temperature controller. In the impregnation step, the temperature of the first composition is preferably 10°C or more, more preferably 15°C or more, and further preferably 18°C or more, and preferably 30°C or less, more preferably 25°C or less, and further preferably 22°C or less. When the temperature of the first composition in the impregnation step is the above lower limit or more, the viscosity of the first composition can be further lowered, so that it is possible to make the first composition better penetrate the portions between the long reinforcing fibers. When the temperature of the first composition in the impregnation step is the above upper limit or less, an unintended curing reaction can be inhibited.

<Curing step (preferably, foaming and curing step)>

The second composition 81 is transferred to mold 63, and then the second composition 81 is cured (preferably foamed and cured) in the mold 63, so that a resin molded body (preferably a foamed resin molded body) conforming with the shape of the mold 63 can be obtained. The resin molded body can be continuously produced by successively transferring the second composition 81 to the mold 63.

In the curing step, it is preferable to cure the second composition (curable resin material) in a mold provided in a passage for molding. For example, the second composition can be cured by heating a metal belt provided on the inner surface of the passage for molding.

In the curing step, the heating temperature of the mold is preferably 35°C or more, more preferably 40°C or more, and still more preferably 45°C or more, and preferably 100°C or less, more preferably 80°C or less, still more preferably 60°C or less, and particularly preferably 55°C or less. When the heating temperature of the mold is the above lower limit or more and the above upper limit or less, the resin material can be cured well.

<Other details>

The viscosity of the first composition at 20°C and 20 rpm is preferably 10000 cps or more, more preferably 15000 cps or more, further preferably 20000 cps or more, and particularly preferably 25000 cps or more, and preferably 45000 cps or less, more preferably 40000 cps or less. When the viscosity is the above lower limit or more and the above upper limit or less, it is possible to make the first composition well penetrate portions between long reinforcing fibers.

The viscosity can be measured using, for example, a B-type viscometer.

The content of the powder (C) of a molded body of a urethane resin in 100% by weight of the first composition is preferably 4% by weight or more and more preferably 6% by weight or more, and preferably 9% by weight or less and more preferably 7% by weight or less. When the content of the powder (C) of a molded body of a urethane resin is the above lower limit or more, the mechanical strength of a resulting resin molded body can be further enhanced. When the content of the powder (C) of a molded body of a urethane resin is the above upper limit or less, it becomes easy to make a composition containing components other than the long reinforcing fibers penetrate the portions between the long reinforcing fibers, so that variation in specific gravity of a resulting resin molded body can be reduced and the flexural modulus can be enhanced.

The content of the powder (C) of a molded body of a urethane resin in the first composition is preferably 5 parts by weight or more, more preferably 10 parts by weight or more, still more preferably 12 parts by weight or more, and particularly preferably 15 parts by weight or more based on 100 parts by weight of the polyol compound (A) in the first composition. The content of the powder (C) of a molded body of a urethane resin in the first composition is preferably 50 parts by weight or less, more preferably 30 parts by weight or less, still more preferably 25 parts by weight or less, particularly preferably 23 parts by weight or less, and most preferably 20 parts by weight or less based on 100 parts by weight of the polyol compound in the first composition. When the content of the filler is the above lower limit or more, the mechanical strength of a resulting resin molded body can be further enhanced. When the content of the filler is the above upper limit or less, it becomes easy to make a composition containing components other than the long reinforcing fibers penetrate the portions between the long reinforcing fibers, so that variation in specific gravity of a resulting resin molded body can be reduced and the flexural modulus can be enhanced.

The content of the powder (C) of a molded body of a urethane resin in the first composition is preferably 5 parts by weight or more, more preferably 10 parts by weight or more, still more preferably 12 parts by weight or more, and particularly preferably 15 parts by weight or more based on 100 parts by weight of the polyol compound (A) in the first composition. The content of the powder (C) of a molded body of a urethane resin in the first composition is preferably 50 parts by weight or less, more preferably 30 parts by weight or less, still more preferably 25 parts by weight or less, particularly preferably 23 parts by weight or less, and most preferably 20 parts by weight or less based on 100 parts by weight of the polyol compound (A) in the first composition. When the content of the powder (C) of a urethane resin molded body is the above lower limit or more, the mechanical strength of a resulting resin molded body can be further enhanced. When the content of the powder (C) of a urethane resin molded body is the above upper limit or less, it becomes easy to make a composition containing components other than the long reinforcing fibers penetrate the portions between the long reinforcing fibers (D), so that variation in specific gravity of a resulting resin molded body can be reduced and the flexural modulus can be enhanced.

The content of the powder (C) of a molded body of a urethane resin in the first composition is preferably 2 parts by weight or more, more preferably 4 parts by weight or more, and preferably 20 parts by weight or less, more preferably 15 parts by weight or less based on 100 parts by weight in total of the polyol compound (A) and the polyisocyanate compound (B) in the first composition. When the content of the powder (C) of a urethane resin molded body is the above lower limit or more, the mechanical strength of a resulting resin molded body can be further enhanced. When the content of the powder (C) of a urethane resin molded body is the above upper limit or less, it becomes easy to make a composition containing components other than the long reinforcing fibers penetrate the portions between the long reinforcing fibers (D), so that variation in specific gravity of a resulting resin molded body can be reduced and the flexural modulus can be enhanced.

In the step of obtaining the first composition, the foaming agent may be contained in the first raw material, may be contained in the second raw material, or may be contained in both the first raw material and the second raw material. The first raw material may not contain a foaming agent, and the second raw material may not contain a foaming agent.

Each of the first composition, the first raw material, and the second raw material may contain components other than the polyol compound (A), the isocyanate compound (B), the powder (C) of a molded body of a urethane resin, the long reinforcing fiber, and the foaming agent. The components other than the polyol compound (A), the isocyanate compound (B), the powder (C) of a molded body of a urethane resin, the long reinforcing fiber, and the foaming agent may be, for example, other components described in the foregoing section of the curable resin material. The first composition may contain a catalyst and may contain a foam stabilizer. The catalyst may be contained in the first raw material, may be contained in the second raw material, or may be contained in both the first raw material and the second raw material. The first raw material may not contain a catalyst, and the second raw material may not contain a catalyst. The foam stabilizer may be contained in the first raw material, may be contained in the second raw material, or may be contained in both the first raw material and the second raw material. The first raw material may not contain a foam stabilizer, and the second raw material may not contain a foam stabilizer.

Hereinafter, the present invention will be specifically described with reference to examples and comparative examples. The present invention is not limited to the following examples.

The following materials were prepared.

(Polyol compound (A))

Polyether polyol to which propylene oxide is added ("SBU Polyol J610" manufactured by Sumika Covestro Urethane Co., Ltd.)

(Isocyanate compound (B))

Diphenylmethane diisocyanate ("44V20L" manufactured by Sumika Covestro Urethane Co., Ltd.)

(Long reinforcing fiber)

Long glass fiber (long glass fiber obtained by aligning a large number of monofilaments having a fiber diameter of 10 um to 20 um to form a roving)

(Powder (C) of urethane resin molded body)

<Classification step>

Shaving waste of resin molded bodies (recycled products, resin molded bodies containing a urethane resin) produced in different lots was classified, affording the following powder of a resin molded body containing a urethane resin.

Powder of resin molded body containing urethane resin (UR powder (C) in the tables, particle size $D_{50}$: 1000 um or less, fiber length of glass fiber: 1000 um or less)

The particle size $D_{90}$ and the particle size $D_{50}$ of the filler were measured using a laser diffraction particle size distribution analyzer.

(Other fillers)

Silica sand
Fly ash

(Foaming agent)

Water

(Catalyst)

Catalyst: Mixture of dipropylene glycol and triethylenediamine

(Foam stabilizer)

Silicone oil ("SZ-1729" manufactured by Toray Dow Silicone Co., Ltd.)

(Example 1)

A resin molded body was prepared by the method illustrated in Fig. 1. The powder (C) of a resin molded body containing a urethane resin was used as a filler. As the first raw material shown in Fig. 1, a liquid containing a polyol compound, a foaming agent, a catalyst, and a foam stabilizer was used. As the second raw material shown in Fig. 1, a polyisocyanate compound was used.

<Step of obtaining first composition>

The filler put into the hopper was fed to the extruder by a belt feeder. In addition, the first raw material put into the first raw material tank was fed to the extruder by a pump. The filler and the first raw material were mixed with the extruder, affording a mixed liquid (mixed liquid A) of the filler and the first raw material. Subsequently, the mixed liquid A was fed to a mixing sprayer by a pump. The second raw material put into the second raw material tank was fed to the mixing sprayer by a pump. The mixed liquid A and the second raw material were uniformly mixed with the mixing sprayer, affording a first composition. The content of each component in the first composition is shown in Table 1.

<Spraying step>

The first composition was sprayed from a discharge port of the mixing sprayer onto a long reinforcing fiber bundle (a fiber bundle of long reinforcing fibers) in which long reinforcing fibers were aligned in one direction. The first composition was sprayed onto the long reinforcing fiber bundle while the long reinforcing fiber bundle was advanced in one direction.

<Impregnation step>

The first composition and the long reinforcing fiber bundle were kneaded between a kneading plate and an impregnation plate under the condition of 15°C to 25°C, and the first composition was forced to penetrate to between the respective long reinforcing fibers constituting the long reinforcing fiber bundle, affording a second composition in which the long reinforcing fiber bundle was impregnated with the first composition. The content of the long reinforcing fiber in the second composition (content based on 100 parts by weight of the polyol compound) is shown in Table 1.

<Curing step (foaming and curing step)>

The second composition was transferred to a mold, and the second composition was cured (foamed and cured) in the mold, affording a resin molded body (foamed resin molded body).

(Examples 2 to 13 and Comparative Examples 1 to 8)

Resin molded bodies were obtained in the same way as in Example 1 except that the type of the filler, the content of each component in the first composition, and the content of the long reinforcing fiber in the second composition (content based on 100 parts by weight of the polyol compound) were set as shown in Tables 1 to 6.

(Reference Example 1)

A resin molded body was obtained in the same way as in Example 1 except that no filler was used and the content of each component in the first composition was set as shown in Table 3.

16

(Evaluation)

(1) Variation in specific gravity of resin molded body (standard deviation)

The resin molded body obtained was cut into pieces having a width of 12.7 mm, a thickness of 12.7 mm, and a length of 127 mm. Ten samples of the cut resin molded body were prepared, and the specific gravity of each sample was measured. The standard deviation of the specific gravity of the 10 samples measured was determined. It is meant that the smaller the variation in specific gravity was, the better the penetration property of the first composition into portions between the long reinforcing fibers was.

(2) Viscosity of first composition

The viscosity of the first composition at 20°C and 20 rpm was measured using a B-type viscometer ("TVC-10 type viscometer" manufactured by Toki Sangyo Co., Ltd.).

(3) Penetration property of first composition into portions between long reinforcing fibers

After making the first composition penetrate the long reinforcing fibers using a lab-scale impregnator, the area (impregnation area) of the portions between the long reinforcing fibers where the first composition penetrated was measured with image analysis software (ImageJ). In addition, the resin molded body in which the long reinforcing fibers were impregnated with the first composition was cut into a regular hexahedron shape having a side of 20 mm. Ten samples of the cut resin molded body were prepared, and the specific gravity of each sample was measured. The standard deviation of the specific gravity of the 10 samples measured was determined. It is meant that the smaller the variation in specific gravity was, the better the penetration property of the first composition into portions between the long reinforcing fibers was.

<Determination criteria for penetration property of first composition into portions between long reinforcing fibers>

○○: The standard deviation of specific gravity is less than 0.11, and the impregnation area ratio is 99% or more.
○: The standard deviation of specific gravity is less than 0.11, but the impregnation area ratio is less than 99%, or the standard deviation of specific gravity is 0.11 or more and less than 0.13, and the impregnation area ratio is 99% or more.
△: The standard deviation of specific gravity is 0.11 or more and less than 0.13, and the impregnation area ratio is less than 99%.
×: The standard deviation of specific gravity is 0.13 or more.

The compositions and results are shown in the following Tables 1 to 6.

[Table 1]

| | | | | Comparative Example 1 | Comparative Example 2 | Example 1 | Example 2 |
|---|---|---|---|---|---|---|---|
| Curable resin material | First composition | Polyol compound (A) | Parts by weight | 100 | 100 | 100 | 100 |
| | | Foam stabilizer | Parts by weight | 1 | 1 | 1 | 1 |
| | | Foaming agent | Parts by weight | 1 | 1 | 1 | 1 |
| | | Catalyst | Parts by weight | 0.3 | 0.3 | 0.3 | 0.3 |
| | | Isocyanate compound (B) | Parts by weight | 144 | 144 | 158 | 163 |
| | | Filler — Type | - | UR powder (C) | UR powder (C) | UR powder (C) | UR powder (C) |
| | | Filler — Compounding amount | Parts by weight | 15 | 15 | 15 | 15 |
| | Used for second composition | Long reinforcing fiber (D) | Parts by weight | 261 | 278 | 272 | 280 |
| Isocyanate index of curable resin material | | | - | 107 | 107 | 115 | 120 |
| Evaluation | Variation in specific gravity of resin molded body (standard deviation) | | - | 0.069 | 0.094 | 0.060 | 0.029 |

[Table 2]

| | | | | Example 3 | Example 4 | Example 5 | Example 6 |
|---|---|---|---|---|---|---|---|
| Curable resin material | First composition | Polyol compound (A) | Parts by weight | 100 | 100 | 100 | 100 |
| | | Foam stabilizer | Parts by weight | 1 | 1 | 1 | 1 |
| | | Foaming agent | Parts by weight | 1 | 1 | 1 | 1 |
| | | Catalyst | Parts by weight | 0.3 | 0.3 | 0.3 | 0.3 |
| | | Isocyanate compound (B) | Parts by weight | 155 | 155 | 155 | 155 |
| | | Filler | Type | - | UR powder (C) | UR powder (C) | UR powder (C) | UR powder (C) |
| | | | Compounding amount | Parts by weight | 15 | 15 | 15 | 30 |
| | Used for second composition | Long reinforcing fiber (D) | Parts by weight | 315 | 276 | 288 | 295 |
| Isocyanate index of curable resin material | | | - | 115 | 115 | 115 | 115 |
| Evaluation | Variation in specific gravity of resin molded body (standard deviation) | | - | 0.12 | 0.041 | 0.026 | 0.052 |

[Table 3]

| | | | | Comparative Example 3 | Comparative Example 4 | Reference Example 1 | Comparative Example 5 |
|---|---|---|---|---|---|---|---|
| Curable resin material | First composition | Polyol compound (A) | | Parts by weight | 100 | 100 | 100 | 100 |
| | | Foam stabilizer | | Parts by weight | 1.0 | 1.0 | 1.0 | 1.0 |
| | | Foaming agent | | Parts by weight | 1.1 | 1.1 | 1.1 | 1.1 |
| | | Catalyst | | Parts by weight | 0.8 | 0.8 | 0.8 | 0.8 |
| | | Isocyanate compound (B) | | Parts by weight | 158 | 158 | 144 | 125 |
| | | Filler | Type | - | Silica sand | Fly ash | - | UR powder (C) |
| | | | Compounding amount | Parts by weight | 15 | 15 | - | 15 |
| | Used for second composition | Long reinforcing fiber (D) | | Parts by weight | 288 | 288 | 288 | 288 |
| Isocyanate index of curable resin material | | | | - | 115 | 115 | 107 | 100 |
| Evaluatio n | Variation in specific gravity of resin molded body (standard deviation) | | | - | 0.135 | 0.150 | 0.011 | 0.105 |

EP 4 400 536 A1

[Table 4]

| | | | | Comparative Example 6 | Example 7 | Example 8 | Example 9 |
|---|---|---|---|---|---|---|---|
| Curable resin material | First composition | Polyol compound (A) | Parts by weight | 100 | 100 | 100 | 100 |
| | | Foam stabilizer | Parts by weight | 1.0 | 1.0 | 1.0 | 1.0 |
| | | Foaming agent | Parts by weight | 1.1 | 1.1 | 1.1 | 1.1 |
| | | Catalyst | Parts by weight | 0.8 | 0.8 | 0.8 | 0.8 |
| | | Isocyanate compound (B) | Parts by weight | 144 | 158 | 165 | 173 |
| | | Filler — Type | - | UR powder (C) | UR powder (C) | UR powder (C) | UR powder (C) |
| | | Filler — Compounding amount | Parts by weight | 15 | 15 | 15 | 15 |
| | Used for second composition | Long reinforcing fiber (D) | Parts by weight | 288 | 288 | 288 | 288 |
| Isocyanate index of curable resin material | | | - | 107 | 115 | 120 | 125 |
| Evaluati on | Variation in specific gravity of resin molded body (standard deviation) | | - | 0.094 | 0.041 | 0.029 | 0.017 |

EP 4 400 536 A1

[Table 5]

| | | | | | Comparative Example 7 | Comparative Example 8 |
|---|---|---|---|---|---|---|
| Curable resin material | First composition | Polyol compound (A) | | Parts by weight | 100 | 100 |
| | | Foam stabilizer | | Parts by weight | 1.0 | 1.0 |
| | | Foaming agent | | Parts by weight | 1.3 | 0.7 |
| | | Catalyst | | Parts by weight | 0.2 | 0.2 |
| | | Isocyanate compound (B) | | Parts by weight | 132 | 132 |
| | | Filler | Type | - | Silica sand | Fly ash |
| | | | Compounding amount | Parts by weight | 76.4 | 150 |
| | Used for second composition | Long reinforcing fiber (D) | | Parts by weight | 250 | 140 |
| Isocyanate index of curable resin material | | | | - | 105 | 105 |
| Evaluation | Viscosity of first composition (20°C, 20 rpm) | | | cps | 19300 | 19830 |
| | Penetration property of first composition into long reinforcing fiber portion | Impregnation area | | % | 96. 94 | 96.19 |
| | | Determination | Determination | | × | × |

[Table 6]

| | | | | Example 10 | Example 11 | Example 12 | Example 13 |
|---|---|---|---|---|---|---|---|
| Curable resin material | First composition | Polyol compound (A) | Parts by weight | 100 | 100 | 100 | 100 |
| | | Foam stabilizer | Parts by weight | 1.0 | 1.0 | 1.0 | 1.0 |
| | | Foaming agent | Parts by weight | 1.1 | 1.1 | 1.1 | 1.1 |
| | | Catalyst | Parts by weight | 0.8 | 0.8 | 0.8 | 0.8 |
| | | Isocyanate compound (B) | Parts by weight | 158 | 158 | 158 | 158 |
| | | Filler — Type | - | UR powder (C) | UR powder (C) | UR powder (C) | UR powder (C) |
| | | Filler — Compounding amount | Parts by weight | 5 | 10 | 15 | 20 |
| | Used for second composition | Long reinforcing fiber (D) | Parts by weight | 272 | 272 | 272 | 272 |
| Isocyanate index of curable resin material | | | - | 115 | 115 | 115 | 115 |
| Evaluati on | Viscosity of first composition (20°C, 20 rpm) | | cps | 11330 | 12830 | 23200 | 30400 |
| | Penetration property of first composition into long reinforcing fiber portion | Impregnatio n area | % | 99.35 | 99.22 | 99.17 | 96.98 |
| | | Determinati on | Determination | ○○ | ○○ | ○○ | △ |

In Examples 2 to 13, the penetration property of the first composition to the portions between the long reinforcing fibers was good, and as a result, the filler and the resin component were well dispersed in the resulting resin molded bodies. Therefore, the resin molded bodies obtained in Examples 2 to 13 can have well improved mechanical strength.

In Reference Example 1, since no filler was used, the variation in specific gravity of the resin molded body was small. However, since the resin molded body of Reference Example 1 contained no filler, the mechanical strength was lower than that of the resin molded bodies of Examples 2 to 13.

**EXPLANATION OF SYMBOLS**

| | |
|---|---|
| 1: | Filler |
| 2: | First raw material |
| 3: | Second raw material |
| 4: | Extruder |
| 5: | Mixing sprayer |
| 6: | Classifier |
| 7: | First composition |
| 8: | Long reinforcing fiber bundle |
| 10: | Resin molded body |
| 11: | Hopper |
| 12: | Belt feeder |
| 21: | First raw material tank |
| 22: | Pump |
| 31: | Second raw material tank |
| 43: | Pump |
| 51: | Pump |
| 61: | Kneading plate |
| 62: | Impregnation plate |
| 63: | Mold |
| 81: | Second composition |
| 100: | Production apparatus |

**Claims**

1. A curable resin material comprising:

   a polyol compound;
   an isocyanate compound;
   a powder of a urethane resin molded body comprising a urethane resin and a glass fiber; and
   a long reinforcing fiber,
   the curable resin material having an isocyanate index of 110 or more and 120 or less.

2. The curable resin material according to claim 1, wherein a content of the powder of a urethane resin molded body is 10 parts by weight or more and 30 parts by weight or less based on 100 parts by weight of the polyol compound.

3. The curable resin material according to claim 1 or 2, wherein the glass fiber contained in the powder of a urethane resin molded body has a fiber length of 1000 um or less.

4. A resin molded body being a molded body of the curable resin material according to any one of claims 1 to 3.

5. The resin molded body according to claim 4, wherein the resin molded body is a foamed resin molded body.

6. A method for producing a resin molded body, the method comprising:

   a step of obtaining a first composition comprising a polyol compound, an isocyanate compound, and a powder of a urethane resin molded body;

an impregnation step of making the first composition penetrate a long reinforcing fiber bundle in which long reinforcing fibers are aligned in one direction to obtain a second composition; and

a curing step of curing the second composition in a mold,

the second composition having an isocyanate index of 110 or more and 120 or less.

7. The method for producing a resin molded body according to claim 6, wherein a content of the powder of a urethane resin molded body in the first composition is 10 parts by weight or more and 30 parts by weight or less based on 100 parts by weight of the polyol compound in the first composition.

8. The method for producing a resin molded body according to claim 6 or 7, wherein the curing step is a foaming and curing step of foaming and curing the second composition in the mold.

9. The method for producing a resin molded body according to any one of claims 6 to 8, further comprising a spraying step of spraying, between the step of obtaining the first composition and the impregnation step, the first composition onto a long reinforcing fiber bundle in which long reinforcing fibers are aligned in one direction.

10. The method for producing a resin molded body according to claim 9, wherein in the spraying step, the first composition is sprayed onto the long reinforcing fiber bundle while the long reinforcing fiber bundle is advanced in one direction.

11. The method for producing a resin molded body according to any one of claims 6 to 10, further comprising a step of obtaining the powder of a urethane resin molded body from a urethane resin molded body comprising a urethane resin and a glass fiber.

12. The method for producing a resin molded body according to any one of claims 6 to 11, wherein the urethane resin molded body to be used for obtaining the powder of a urethane resin molded body is a recycled product.

[FIG. 1]

## INTERNATIONAL SEARCH REPORT

International application No.

**PCT/JP2022/033296**

**A. CLASSIFICATION OF SUBJECT MATTER**

*C08J 5/24*(2006.01)i; *C08G 18/00*(2006.01)i; *C08G 18/08*(2006.01)i; *C08J 5/04*(2006.01)i; *C08J 9/04*(2006.01)i;
*C08K 3/40*(2006.01)i; *C08K 5/521*(2006.01)i; *C08K 7/02*(2006.01)i; *C08L 75/04*(2006.01)i; *E01B 3/44*(2006.01)i
FI: C08J5/24 CFF; C08G18/00 J; C08G18/08 038; C08L75/04; C08K7/02; C08K3/40; C08K5/521; E01B3/44; C08J9/04
103; C08J5/04 CFF

According to International Patent Classification (IPC) or to both national classification and IPC

**B. FIELDS SEARCHED**

Minimum documentation searched (classification system followed by classification symbols)

C08J5/24; C08G18/00; C08G18/08; C08J5/04; C08J9/04; C08K3/40; C08K5/521; C08K7/02; C08L75/04; E01B3/44

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/054056 A1 (SEKISUI CHEMICAL CO LTD) 19 March 2020 (2020-03-19) claims, examples 1-26, fig. 7 | 1-12 |
| A | JP 2018-103451 A (SEKISUI CHEMICAL CO LTD) 05 July 2018 (2018-07-05) claims, paragraphs [0089]-[0090], examples 1-11 | 1-12 |
| A | WO 2014/196607 A1 (KANEKA CORP) 11 December 2014 (2014-12-11) claims, paragraph [0039], examples 3-17 | 1-12 |
| A | JP 2019-515070 A (BASF SE) 06 June 2019 (2019-06-06) claims, paragraph [0039], examples 1-6 | 1-12 |
| A | JP 2008-56928 A (BAYER MATERIAL SCIENCE LLC) 13 March 2008 (2008-03-13) claims, paragraph [0030], examples 1-3, 6-7, 11, 13 | 1-12 |
| A | JP 2012-521450 A (EVONIK DEGUSSA GMBH) 13 September 2012 (2012-09-13) claims, paragraph [0070], examples | 1-12 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **21 October 2022** | **01 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/033296**

| C. | DOCUMENTS CONSIDERED TO BE RELEVANT | |
|---|---|---|
| Category* | Citation of document, with indication, where appropriate, of the relevant passages | Relevant to claim No. |
| A | US 2020/0010647 A1 (BORAL IP HOLDINGS (AUSTRALIA) PTY LIMITED) 09 January 2020 (2020-01-09)<br>claims, paragraphs [0041], [0052], examples | 1-12 |
| A | US 2020/0317851 A1 (BORAL IP HOLDINGS (AUSTRALIA) PTY LIMITED) 08 October 2020 (2020-10-08)<br>claims, paragraph [0041], examples | 1-12 |

Form PCT/ISA/210 (second sheet) (January 2015)

**INTERNATIONAL SEARCH REPORT**
Information on patent family members

International application No.

**PCT/JP2022/033296**

| Patent document cited in search report | | | Publication date (day/month/year) | Patent family member(s) | | | Publication date (day/month/year) |
|---|---|---|---|---|---|---|---|
| WO | 2020/054056 | A1 | 19 March 2020 | US 2022/0056232 A1 claims, examples 1-26, fig. 7 EP 3851467 A1 | | | |
| JP | 2018-103451 | A | 05 July 2018 | (Family: none) | | | |
| WO | 2014/196607 | A1 | 11 December 2014 | US 2018/0371239 A1 claims, paragraph [0051], examples 3-17 EP 3006478 A1 CN 105308085 A | | | |
| JP | 2019-515070 | A | 06 June 2019 | US 2019/0092911 A1 claims, paragraph [0039], examples 1-6 EP 3445571 A1 CA 3021103 A CN 109070493 A KR 10-2019-0003584 A | | | |
| JP | 2008-56928 | A | 13 March 2008 | US 2008/0058468 A1 claims, paragraph [0029], examples 1-3, 6-7, 11, 13 EP 1894956 A1 CN 101134842 A KR 10-2008-0020558 A | | | |
| JP | 2012-521450 | A | 13 September 2012 | US 2014/0065911 A1 claims, paragraph [0085], examples WO 2010/108701 A1 EP 2411454 A1 DE 102009001793 A KR 10-2011-0139702 A CN 102361917 A | | | |
| US | 2020/0010647 | A1 | 09 January 2020 | WO 2018/169508 A1 | | | |
| US | 2020/0317851 | A1 | 08 October 2020 | WO 2017/204781 A1 | | | |

Form PCT/ISA/210 (patent family annex) (January 2015)

**REFERENCES CITED IN THE DESCRIPTION**

**Patent documents cited in the description**

- JP 2000080191 A

- WO 2020054056 A1